# EUROPÄISCHE PATENTSCHRIFT

(11) **EP 2 781 239 B1**
(45) Veröffentlichungstag und Bekanntmachung des Hinweises auf die Patenterteilung: **13.06.2018**
(21) Anmeldenummer: 13160477.9
(22) Anmeldetag: 21.03.2013
(51) Int. Cl.: A63B 22/16, A63B 22/18, A63B 71/06, A63B 26/00

(54) **Vorrichtung, insbesondere zum Gleichgewichtstraining, mit zumindest einer beweglichen Plattform**
Device, in particular for balance training, with at least one moving platform
Dispositif, notamment pour l'entraînement de l'équilibre avec au moins une plate-forme mobile

(43) Veröffentlichungstag der Anmeldung: 24.09.2014
(73) Patentinhaber: Airbus Defence and Space GmbH, 82024 Taufkirchen (DE)
(72) Erfinder: Kern, Peter, 88682 Salem (DE); Esteller Vela, Marcos, 44002 Tervel (ES); Kübler, Ullrich, 88677 Markdorf (DE); Simnacher, Matthias, 88677 Markdorf (DE)
(74) Vertreter: Daub, Thomas

(56) Entgegenhaltungen:
- EP-A2- 1 880 702
- WO-A1-2007/141429
- US-A- 5 429 562
- US-A1- 2009 133 294
- US-A1- 2009 186 746
- US-A1- 2013 045 812

## Beschreibung

### Stand der Technik

Die Erfindung betrifft eine Vorrichtung nach dem Oberbegriff des Anspruchs 1. Vorrichtungen zum Gleichgewichtstraining und/oder feinmotorischen Training weisen zumindest eine bewegliche Plattform, die in zumindest zwei Dimensionen schwingend bewegbar ist, auf, wie beispielsweise in der US2009133294 A1 beschrieben ist. Es sind Vorrichtungen mit Dämpfungselementen zu einer Dämpfung von Bewegungen der beweglichen Plattform bekannt, die beispielsweise als kunststoffummantelte Stahlseile, welche die Plattform hängend befestigen und aufgrund von Materialeigenschaften der Kunststoffummantelung dämpfend wirken, ausgebildet sind. Die bekannten Dämpfungselemente können lediglich sehr grob eingestellt werden und eine dynamische Änderung oder Anpassung von Dämpfungseigenschaften während eines Betriebs der Vorrichtung ist nicht möglich.

Die Aufgabe der Erfindung besteht insbesondere darin, eine gattungsgemäße Vorrichtung mit verbesserten Eigenschaften hinsichtlich einer Anpassbarkeit einer Dämpfung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Vorrichtung, insbesondere zum Gleichgewichtstraining und/oder feinmotorischen Training, mit zumindest einer beweglichen Plattform, die zumindest rotatorisch bewegbar ist, und mit zumindest einer Gegenkrafteinheit, die dazu vorgesehen ist, einem Drehmoment, das zu einer Rotation der zumindest einen Plattform führt, einen Widerstand entgegenzusetzen. Unter einer "beweglichen Plattform, die zumindest rotatorisch bewegbar ist" soll insbesondere eine Plattform, vorzugsweise eine ebene Plattform, verstanden werden, die derart gelagert ist, beispielsweise mittels einer Aufhängung an einem Rahmengerüst, dass sie zumindest in Rotation um eine Gierachse, insbesondere Mittelachse einer Ruheposition, versetzt werden kann und vorzugsweise zudem entlang zweier senkrecht zueinander verlaufender Richtungen in einer Ebene, vorzugsweise einer Ebene parallel zu einem Boden, auf dem die Vorrichtung aufgestellt ist, innerhalb eines vorgegebenen Auslenkungsbereichs translatorisch ausgelenkt werden kann und die eine Rückstellung der Auslenkung auf eine Ruhelage aufweist. Vorzugsweise kann die bewegliche Plattform zusätzlich zu der Auslenkung in zwei Richtungen in der Ebene noch in eine Richtung senkrecht zu der Ebene gekippt oder ohne eine translatorische Bewegung dreidimensional um einen Roll- und/oder Nickwinkel ausgelenkt werden. Die Plattform weist eine Standoberfläche auf, auf die sich eine Person aufstellt, die die Plattform aufgrund eigener Bewegungen auslenkt und/oder einer Auslenkung der Plattform durch eine äußere Anregung entgegenwirkt. Vorzugsweise ist die Standoberfläche eben ausgeführt, grundsätzlich kann die Standoberfläche jedoch auch gekrümmt oder in anderen, von einer ebenen Fläche verschiedenen Grundformen, beispielsweise halbkugelförmig, ausgeführt sein. Die Vorrichtung ist insbesondere zu einer Verwendung zu einem Training zur Stärkung des Gleichgewichtssinns oder zu einer Therapie von Störungen des Gleichgewichtssinns vorgesehen. Unter einer "Gegenkrafteinheit, die einer Kraft zu einer Auslenkung der beweglichen Plattform einen Widerstand entgegensetzt" soll insbesondere eine Einheit verstanden werden, die dazu vorgesehen ist, einer zu einer Auslenkung der Plattform führenden Kraft eine Gegenkraft entgegenzusetzen und somit einer Auslenkung der Plattform einen bestimmten Widerstand entgegenzusetzen. Insbesondere umfasst die Gegenkrafteinheit hierzu elastische Elemente, die eine Rückstellkraft erzeugen, wie beispielsweise Federelemente. Die Vorrichtung weist zumindest ein erstes Verbindungselement und zumindest ein zweites Verbindungselement auf, die die Gegenkrafteinheit mit der zumindest einen Plattform verbinden, wobei das zumindest eine erste Verbindungselement und das zumindest eine zweite Verbindungselement in einem unterschiedlichen Abstand zu einem Zentrum der zumindest einen Plattform an dieser angeordnet sind. Insbesondere übertragen das zumindest eine erste Verbindungselement und das zumindest eine zweite Verbindungselement zumindest eine durch die Gegenkrafteinheit erzeugte Gegenkraft eine auf die zumindest eine Plattform, wobei aufgrund des unterschiedlichen Abstands des zumindest eine ersten Verbindungselements und des zumindest eine zweite Verbindungselements zu dem Zentrum der Plattform die Gegenkraft in ein Gegenmoment, das einer Rotation der zumindest eine Plattform entgegenwirkt, umgesetzt wird. Unter einem "Verbindungselement" soll insbesondere ein Element verstanden werden, das dazu vorgesehen ist, eine Auslenkung der Plattform aus der Ruhelage auf zumindest ein weiteres Element zu übertragen. Vorzugsweise ist das Verbindungselement als biegeschlaffes Element ausgebildet. Mittels einer Anbringung der Verbindungselemente in unterschiedlichen Abständen zu dem Zentrum der Plattform werden durch eine Rotationsbewegung der Plattform das erste Verbindungselement und das zweite Verbindungselement unterschiedliche weit bewegt, wodurch ein rein rotatorischer Anteil einer Plattformbewegung übertragen wird und durch die Gegenkrafteinheit eine Gegenkraft auf den rein rotatorischen Anteil einer Plattformbewegung ausgeübt werden kann. Insbesondere übertragen die Verbindungselemente ebenfalls eine durch die Gegenkrafteinheit erzeugte Gegenkraft, die einer rein translatorischen Auslenkung der Plattform entgegengesetzt wird. Insbesondere kann durch das zumindest eine erste Verbindungselement und das zumindest eine zweite Verbindungselement mit einer geringen Anzahl an Verbindungselemente der rotatorische Anteil, insbesondere auch eine Rotation um eine Nullachse in einer Ruhelage, mit einer Gegenkraft beaufschlagt werden. Insbesondere wird die Gegenkraft durch die Gegenkrafteinheit zusätzlich zu etwaigen Gegenkräften durch Verdrillung oder Materialelastizitäten von Aufhängungselementen der Plattform oder dergleichen aufgebracht und auf die Plattform eingeleitet und ist vorzugsweise veränderbar und bevorzugt während eines Plattformbetriebs einstellbar und/oder anpassbar. Es kann insbesondere ein Gegenmoment zu einem rotatorischen Anteil einer Plattformbewegung zusätzlich zu einer Gegenkraft zu einem translatorischen Anteil der Plattformbewegung erzeugt werden, und unterschiedlich starke Gegenwirkungen zu Translationen und Rotationen der Plattform bereitgestellt werden, wodurch zusätzliche Einstellmöglichkeiten für eine Trainingsplattformen und komplexe Trainingsmöglichkeiten mit hohem Trainingseffekt bereitgestellt werden.

Ferner wird vorgeschlagen, dass das zumindest eine erste Verbindungselement als ein zentrales, in zumindest einer Ruhelage der Plattform zumindest teilweise entlang einer Nullachse der Ruhelage der Plattform verlaufendes Verbindungselement ausgebildet ist. Unter einer "Nullachse einer Ruhelage der Plattform" soll insbesondere eine Achse verstanden werden, die senkrecht auf einer Ebene der Plattform steht und in einer Ruhelage der Plattform durch ein geometrisches Zentrum der Plattform verläuft. Unter einem "zentralen Verbindungselement" soll insbesondere verstanden werden, dass das Verbindungselement zumindest in einem Bereich nahe der Nullachse der Ruhelage der Plattform angeordnet ist, vorzugsweise an einem Mittelpunkt einer Fläche der Plattform befestigt ist, und dass das Verbindungselement betragsmäßig gleiche Auslenkungen der Plattform in einander gegenüberliegende Richtungen in eine gleiche Auslenkung umsetzt. Insbesondere kann durch das zentrale Verbindungselement eine Dämpfung von translatorischen Bewegungen der Plattform durch eine Dämpfung einer Bewegung des zentralen Verbindungselements erfolgen. Unter einer "Dämpfung von Bewegungen" soll insbesondere verstanden werden, dass den Bewegungen eine Gegenkraft, insbesondere eine Rückstellkraft, oder ein Gegenmoment entgegengesetzt wird, so dass eine durch eine einwirkendende, auslenkende Kraft oder ein einwirkendes Drehmoment erzielte Auslenkung oder Rotation der Plattform geringer ist als eine Auslenkung oder Rotation durch die einwirkendende, auslenkende Kraft oder das einwirkende Drehmoment, welche frei von einer Dämpfung einwirken kann. Insbesondere ist das zentrale Verbindungselement dazu vorgesehen, die zumindest zweidimensionale Bewegung eindimensional auf die Gegenkrafteinheit zu übertragen. Es kann insbesondere eine Reduktion einer Anzahl benötigter Gegenkraftelemente, die einen Widerstand zu Auslenkungen und Rotationsbewegungen der Plattform erzeugen, erreicht werden.

Des Weiteren wird vorgeschlagen, dass das zumindest eine erste Verbindungselement und das zumindest eine zweite Verbindungselement getrennt voneinander mit der Gegenkrafteinheit verbunden sind. Darunter, dass "das zumindest eine erste Verbindungselement und das zumindest eine zweite Verbindungselement getrennt voneinander mit der Gegenkrafteinheit verbunden sind", soll insbesondere verstanden werden, dass das zumindest eine erste Verbindungselement und das zumindest eine zweite Verbindungselement unverbunden miteinander angeordnet sind und jeweils mit unterschiedlichen Gegenkraftelementen zur Erzeugung einer Gegenkraft verbunden sind, so dass das zumindest eine erste Verbindungselement und das zumindest eine zweite Verbindungselement von unterschiedlichen Gegenkraftelementen mit einer jeweiligen Gegenkraft zur Erzeugung eines Gegenmoments beaufschlagt werden, die einer rotatorischen Bewegung der Plattform entgegengesetzt werden. Es kann insbesondere konstruktiv einfach eine Verbindung zu der Gegenkrafteinheit, die eine Gegenkraft zu einer rotatorischen Bewegung der Plattform erzeugt, erreicht werden.

Weiterhin wird vorgeschlagen, dass das zumindest eine erste Verbindungselement und das zumindest eine zweite Verbindungselement zumindest teilweise einstückig miteinander ausgebildet sind. Darunter, dass "das zumindest eine erste Verbindungselement und das zumindest eine zweite Verbindungselement zumindest teilweise einstückig miteinander ausgebildet sind", soll insbesondere verstanden werden, dass das zumindest eine erste Verbindungselement und das zumindest eine zweite Verbindungselement zumindest aneinander befestigt sind oder aus einem gemeinsamen Element hervorgehen, beispielsweise als sich aufteilende Teilstränge eines gemeinsamen Seilelements. Insbesondere bildet das zumindest eine zweite Verbindungselement zusammen mit dem zumindest einen ersten Verbindungselement an einem Kontaktpunkt eine Y-förmige Verbindung aus. Insbesondere sind das zumindest eine erste Verbindungselement und das zumindest eine zweite Verbindungselement an einem einstückig miteinander ausgebildeten Bereich mit der Gegenkrafteinheit verbunden. Es kann insbesondere eine Anzahl benötigter Gegenkraftelement der Gegenkrafteinheit zur Erzeugung eines Gegenmoments reduziert werden.

Weiterhin wird vorgeschlagen, dass das zumindest eine zentrale Verbindungselement die zumindest zweidimensionale Bewegung der zumindest einen Plattform eindimensional auf die zumindest eine Gegenkrafteinheit überträgt. Es kann insbesondere eine Reduktion einer benötigten Anzahl von Gegenkraftelementen der Gegenkrafteinheit erreicht werden.

Des Weiteren wird vorgeschlagen, dass die zumindest einen Gegenkrafteinheit zumindest eine Bewegungswandlungseinheit aufweist, die einen rotatorischen Anteil der zumindest zweidimensionalen Bewegung der zumindest einen Plattform in eine Drehbewegung des zumindest einen zentralen Verbindungselements um eine eigene Achse umwandelt. Insbesondere verbleibt ein Betrag einer translatorischen Auslenkung der Plattform aus der Ruhelage als eine Auslenkung des zentralen Verbindungselements. Insbesondere wird der rotatorische Anteil der Bewegung der Plattform in einen rotatorischen Anteil einer Bewegung des zumindest einen zentralen Verbindungselements in einem Teilbereich des zentralen Verbindungselements, der zwischen der zumindest einen beweglichen Plattform und der zumindest einen Bewegungswandlungseinheit angeordnet ist, umgesetzt und dieser rotatorische Anteil der Bewegung des zentralen Verbindungselements in eine Drehbewegung des zentralen Verbindungselements um die eigene Achse umgewandelt. Insbesondere wird somit die zumindest zweidimensionale Bewegung der Plattform in eine eindimensionale Bewegung des zentralen Verbindungselements umgesetzt. Unter einer "Bewegungswandlungseinheit" soll insbesondere eine Einheit verstanden werden, die dazu vorgesehen ist, eine Bewegung in einer rotatorischen oder translatorischen Richtung in eine Bewegung in eine andere rotatorische oder translatorische Richtung umzuwandeln. Vorzugsweise ist die Bewegungswandlungseinheit dazu vorgesehen, eine Dimensionalität einer Bewegung zu reduzieren, indem beispielsweise eine zweidimensionale Bewegung mit einer rotatorischen Komponente in eine rein translatorische Bewegung in einer Dimension umgesetzt wird. Vorzugsweise umfasst die Bewegungswandlungseinheit ein Element, um das das zentrale Verbindungselement sich drehen kann, um den rotatorischen Anteil der Bewegung in eine Drehung um die Achse des zentralen Verbindungselements umzusetzen. Es kann insbesondere eine Reduktion einer Anzahl benötigter Dämpfungselemente erreicht werden, indem nur noch einer translatorischen Auslenkung der Plattform aus der Ruhelage ein Widerstand entgegengesetzt wird.

Ferner wird vorgeschlagen, dass die zumindest eine Bewegungswandlungseinheit zumindest eine Hülse oder zumindest eine Bohrung mit einer abgerundeten Öffnung aufweist. Insbesondere ist die Hülse oder Bohrung mit abgerundeter Öffnung dazu vorgesehen, einen rotatorischen Anteil einer Bewegung des zentralen Verbindungselements in eine Drehung um die eigene Achse des zentralen Verbindungselements umzusetzen, indem das zentrale Verbindungselement um einen Kontaktpunkt mit der Hülse oder Bohrung an der abgerundeten Öffnung rotiert. Grundsätzlich kann in alternativen Ausgestaltungen die Öffnung von einer scharfkantigen anstatt einer abgerundeten Öffnung gebildet sein. Es kann insbesondere eine konstruktiv einfache Bewegungswandlungseinheit erreicht werden. Vorzugsweise ist das zumindest eine zentrale Verbindungselement zumindest teilweise von einem Seilelement gebildet. Unter einem "Seilelement" soll insbesondere eine aus natürlichen oder künstlichen Fasern oder aus metallenen Drähten, wobei die Fasern oder Drähte verdrillt sind, bestehendes, biegeschlaffes längliches Element verstanden werden, das zu einer Übertragung von Zugkräften vorgesehen ist. Insbesondere ist das Seilelement von einem Stahlseil aus Stahldrähten gebildet. Insbesondere kann ein Seilelement eine Beschichtung, eine Hülse oder eine Ummantelung aus einem gleichen oder einem anderen Material als ein Material der Fasern oder Drähte aufweisen. Grundsätzlich kann das zentrale Verbindungselement zumindest teilweise von einem Kettenelement gebildet sein. Es kann insbesondere ein einfach herstellbares und günstiges zentrales Verbindungselement erreicht werden. Die zumindest eine Gegenkrafteinheit weist zumindest ein Federelement auf. Unter einem "Federelement" soll insbesondere ein makroskopisches Element verstanden werden, das in einem normalen Betriebszustand um zumindest 10 %, insbesondere um wenigstens 20 %, vorzugsweise um mindestens 30 % und besonders vorteilhaft um zumindest 50 % elastisch in zumindest einer Länge veränderbar ist und das insbesondere eine von einer Veränderung der Länge abhängige und vorzugsweise zu der Veränderung proportionale Gegenkraft erzeugt, die der Veränderung entgegenwirkt. Unter einer "Länge" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm, vorzugsweise von mindestens 10 mm und besonders bevorzugt von mindestens 50 mm verstanden werden. Insbesondere ist das Federelement mit dem zentralen Verbindungselement verbunden und setzt einer Auslenkung des zentralen Verbindungselements einen von einer Vorspannung abhängigen Widerstand entgegen, so dass Auslenkungen in eine Richtung ein Widerstand entgegengesetzt wird. Das Federelement kann als ein linear elastisch verformbares Element oder als ein Torsionsfederelement ausgebildet sein. Grundsätzlich kann anstelle von oder zusätzlich zu einem Federelement die Gegenkrafteinheit ein zusätzliches Dämpfungselement umfassen, das seriell mit oder parallel zu dem Federelement in der Gegenkrafteinheit angeordnet sein kann. Auch ist es prinzipiell vorstellbar, eine Anzahl von Gruppen von parallel zueinander angeordneten Federelementen und zusätzlichen Dämpfungselementen zu verwenden, wobei die Anzahl von Gruppen zueinander parallel und/oder seriell geschaltet ist. Das zusätzliche Dämpfungselement kann von einem Element mit inneren Dämpfungseigenschaften, beispielsweise einem Gummiseil oder einem umsponnenes Gummiseil mit einer nichtlinearen Lastcharakteristik, gebildet sein. Das zusätzliche Dämpfungselement kann mit dem Federelement integriert ausgeführt sein. Es kann insbesondere eine konstruktiv einfach ausgeführte Gegenkrafteinheit erreicht werden.

Vorzugsweise umfasst die Vorrichtung zumindest eine Entdralleinheit zu einer Verbindung des zentralen Verbindungselements und des Federelements, das eine Drehung des zentralen Verbindungselements um die eigene Achse ermöglicht. Unter einer "Entdralleinheit" soll insbesondere eine Einheit verstanden werden, die an einem Element, insbesondere dem zentralen Verbindungselement, an einem Ende befestigt ist und eine Drehung des Elements um die eigene Achse innerhalb des Elements ermöglicht, wobei die Drehung des Elements in eine interne Drehung der Entdralleinheit umgesetzt wird. Es kann insbesondere eine konstruktiv einfache Verbindung des zentralen Verbindungselements und des Federelements erreicht werden.

Des Weiteren wird zumindest eine Einstelleinheit, die zu einer Einstellung einer Gegenkraftstärke vorgesehen ist, vorgeschlagen. Unter einer "Einstelleinheit" soll insbesondere eine Einheit verstanden werden, die manuell oder auf elektronischem Weg gesteuert auf die Gegenkrafteinheit einwirkt und eine Gegenkraftstärke der Gegenkrafteinheit und somit den möglichen Bewegungsradius der Plattform bei einer gegebenen Auslenkungskraft verändert. Vorzugsweise ist die Einstelleinheit dazu vorgesehen, die Gegenkraftstärke während eines Betriebs der Vorrichtung zu verändern. Es kann insbesondere ein flexibel auf unterschiedliche Bedingungen anpassbare Vorrichtung erreicht werden.

Ferner wird vorgeschlagen, dass die zumindest eine Einstelleinheit zumindest einen Aktuator, vorzugsweise zumindest einen elektrischen Aktuator, aufweist. Unter einem "elektrischen Aktuator" soll insbesondere ein mechatronisches Bauteil verstanden werden, das dazu vorgesehen ist, elektrische Signale in eine Bewegung, insbesondere in eine Linearbewegung, umzusetzen. Insbesondere ist der elektrische Aktuator dazu vorgesehen, eine Vorspannung des Federelements einzustellen. Insbesondere ist der Aktuator zu einer stufenlosen Einstellung der Vorspannung vorgesehen. Es kann insbesondere eine kostengünstig realisierbare und einfache ansteuerbare, stufenlose Einstellungseinheit erreicht werden.

Alternativ kann die zumindest eine Gegenkrafteinheit zumindest ein unmittelbar einstellbares Dämpfungselement aufweisen. Unter einem "unmittelbar einstellbaren Dämpfungselement" soll insbesondere ein Dämpfungselement verstanden werden, dessen Gegenkraftstärke mittels einer direkten elektrischen Ansteuerung, insbesondere ohne vorherige Ansteuerung eines Aktuators zur Anpassung einer Vorspannkraft, oder durch Anlegen eines äußeren elektrischen und/oder magnetischen Felds eingestellt werden kann. In alternativen Ausgestaltungen kann die Gegenkrafteinheit anstelle von oder zusätzlich zu einem unmittelbar einstellbaren Dämpfungselement und/oder Federelement auch eine Wirbelstrombremse oder eine Reibbremse aufweisen. Es kann insbesondere konstruktiv einfach eine stufenlose und schnell erfolgende Einstellung einer Gegenkraftstärke erreicht werden. Insbesondere kann das unmittelbar einstellbare Dämpfungselement von einem elektrorheologischen Dämpfer und/oder einem magnetorheologischen Dämpfer gebildet sein. Unter einem "elektrorheologischen Dämpfer" soll insbesondere ein Dämpfer mit einer elektrorheologischen Flüssigkeit verstanden werden. Unter einer "elektrorheologischen Flüssigkeit" soll insbesondere eine Flüssigkeit verstanden werden, in der elektrisch polarisierbare Partikel suspendiert sind und die eine Viskosität aufweist, die durch Anlegen eines elektrischen Felds durch Ausbildung von Dipolen bei den Partikeln verändert werden kann. Unter einem "magnetorheologischen Dämpfer" soll insbesondere ein Dämpfer mit einer magnetorheologischen Flüssigkeit verstanden werden. Unter einer "magnetorheologischen Flüssigkeit" soll insbesondere eine Flüssigkeit verstanden werden, in der magnetische polarisierbare Partikel suspendiert sind und die eine Viskosität aufweist, die durch Anlegen eines magnetischen Felds verändert werden kann. Es kann insbesondere ein konstruktiv einfaches und unmittelbar einstellbares Dämpfungselement erreicht werden.

Des Weiteren wird vorgeschlagen, dass die zumindest eine Einstelleinheit zumindest eine Steuereinheit aufweist. Unter einer "Steuereinheit" soll insbesondere eine Einheit verstanden werden, die zumindest eine Recheneinheit und zumindest eine Speichereinheit aufweist, und die dazu vorgesehen ist, zumindest ein in der Speichereinheit gespeichertes Programm auszuführen und vorzugsweise eine Einstellung der Gegenkraftstärke in Abhängigkeit von dem gespeicherten Programm und/oder von einer Bewegung der Plattform vorzunehmen. Insbesondere kann die Steuereinheit dazu vorgesehen sein, in Abhängigkeit von Messwerten zumindest eines Sensors zur Messung einer Auslenkung der Plattform, einer Auslenkungsgeschwindigkeit oder einer Auslenkungsbeschleunigung die Gegenkraftstärke einzustellen. Der Sensor kann beispielsweise von einer Kamera, einem Induktionssensor oder einem weiteren, einem Fachmann als geeignet erscheinenden Sensor zur Positionsmessung gebildet sein. Es kann insbesondere eine flexibel anpassbare Vorrichtung erreicht werden. Es kann insbesondere eine Vorrichtung erreicht werden, die leicht und schnell auf unterschiedliche Anforderungsmöglichkeiten angepasst werden kann und die insbesondere mit weiteren äußeren Geräten, beispielsweise einer Videospielkonsole, kombiniert werden kann.

Zudem kann die zumindest eine Steuereinheit zur Ausführung eines Trainingsprogramms vorgesehen sein, bei dem eine langsame Absenkung der Gegenkraftstärke der Gegenkrafteinheit durch eine Zunahme einer Auslenkungsamplitude der Plattform einer raschen Erhöhung der Gegenkraftstärke überlagert wird. Unter einer "langsamen Absenkung" und einer "raschen Erhöhung" der Gegenkraftstärke soll insbesondere verstanden werden, dass die Absenkung der Gegenkraftstärke langsam gegenüber der Erhöhung der Gegenkraftstärke abläuft. Unter einer "Zunahme einer Auslenkungsamplitude" soll insbesondere verstanden werden, dass aufgrund eines Nachlassens der Gegenkraftstärke und/oder aufgrund von Bewegungen einer Person auf der Plattform, beispielsweise von Ausgleichsbewegungen der Person bei einer externen Anregung, eine Amplitude von Auslenkungen der Plattform aus der Ruhelage zunimmt. Vorzugsweise wird eine Zunahme der Auslenkungsamplitude der Plattform durch die Recheneinheit der Steuereinheit ermittelt. Insbesondere dient die rasche Erhöhung der Gegenkraftstärke dazu, eine übergroße Zunahme der Auslenkungsamplitude der Plattform zu vermeiden. Insbesondere ist die langsame Absenkung der Gegenkraftstärke dazu vorgesehen, im Verlauf des Trainingsprogramms durch eine allmähliche Zunahme einer Auslenkungsamplitude bei einer gleichen Bewegung der Person auf der Plattform die Person im Verlauf des Trainingsprogramms immer wieder erneut zu fordern und somit einen hohen Trainingseffekt zu erzielen. Insbesondere können Stabilität und motorische Fähigkeiten einer das Trainingsprogramm durchlaufenden Person durch eine langsame Absenkung der Gegenkraftstärke und ein dadurch bedingtes Erweitern einer durch Bewegungen der Person bewirkten Auslenkung der Plattform einfach und sicher festgestellt und trainiert werden. Es kann insbesondere ein Trainingsprogramm mit einer hohen, personenspezifisch angepassten Stabilität erreicht werden. Weiterhin kann das zentrale Verbindungselement zu einer Dämpfung der Bewegung der Plattform mittels äußerer Reibung vorgesehen sein. Unter einer "äußeren Reibung" soll insbesondere eine Reibung des zentralen Verbindungselements mit einem weiteren, von dem zentralen Verbindungselement verschiedenen Bauteil der Vorrichtung verstanden werden. Weiter ist das zentrale Verbindungselement dazu vorgesehen, mit einer Oberfläche der Hülse oder Bohrung mit abgerundeter Öffnung gemäß der Euler-Eytelweinschen Gleichung zu reiben und kinetische Energie dissipativ in Wärmeenergie umzusetzen. Es kann insbesondere eine zusätzliche Dämpfung von Bewegungen der beweglichen Plattform erreicht werden.

Weiterhin wird vorgeschlagen, dass die zumindest eine Gegenkrafteinheit zumindest ein Element mit einer nichtlinearen Kraftcharakteristik aufweist. Unter einem "Element mit einer nichtlinearen Kraftcharakteristik" soll insbesondere ein Element verstanden werden, dass unter Zugspannung eine nichtlineare Ausdehnung erfährt, beispielsweise ein Gummiseil oder ein Federelement mit einer nichtlinearen Kraft-Ausdehnungs-Kennlinie. Es kann insbesondere eine hohe Variabilität der Gegenkraft, die durch die Gegenkrafteinheit erzeugt wird, erreicht werden.

Die erfindungsgemäße Vorrichtung ist insbesondere dazu vorgesehen, zu einem Gleichgewichtstraining und/oder zur Therapie eingesetzt zu werden. In der Therapie kann die erfindungsgemäße Vorrichtung beispielsweise zum Muskeltraining eingesetzt werden. Insbesondere wird eine Verwendung der erfindungsgemäßen Vorrichtung in Zusammenwirkung mit einer Spielkonsole vorgeschlagen. Vorzugsweise umfasst die erfindungsgemäße Vorrichtung eine mit der Spielkonsole verbundene Steuereinheit, die entweder in die Spielkonsole integriert oder separat von dieser ausgebildet sein kann. Insbesondere ist die mit der Spielkonsole verbundene Steuereinheit von der Steuereinheit der Einstelleinheit gebildet.

Ferner wird eine Verwendung der erfindungsgemäßen Vorrichtung unter Bedingungen reduzierter Schwerkraft zu einem Gleichgewichtstraining und/oder feinmotorischem Training und/oder zur Therapie vorgeschlagen. Unter "Bedingungen reduzierter Schwerkraft" sollen insbesondere Bedingungen verstanden werden, bei denen eine Schwerewirkung von maximal 0,9 g, vorteilhaft maximal 1*10⁻³ g, vorzugsweise maximal 1*10⁻⁶ g und besonders bevorzugt maximal 1*10⁻⁸ g wirksam ist. Die Schwerewirkung kann durch Gravitation und/oder künstlich durch eine Beschleunigung erzeugt sein. Mit "g" ist der Wert der Fallbeschleunigung auf der Erde von 9,81 m/s² bezeichnet. Insbesondere wird eine Verwendung der erfindungsgemäßen Vorrichtung in Zusammenwirkung mit einer Spielkonsole unter Bedingungen reduzierter Schwerkraft vorgeschlagen. Es kann insbesondere eine einfach auf persönliche Bedürfnisse anpassbare Trainingsmöglichkeit unter Bedingungen reduzierter Schwerkraft bereitgestellt werden.

Insbesondere kann eine Verwendung der erfindungsgemäßen Vorrichtung für ein Trainingsprogramm vorgesehen sein, bei dem einer langsamen Absenkung der Gegenkraftstärke der Gegenkrafteinheit eine rasche Erhöhung der Gegenkraftstärke durch eine Zunahme einer Auslenkungsamplitude der Plattform überlagert wird. Es kann insbesondere ein Trainingsprogramm mit einer hohen, personenspezifisch angepassten Stabilität erreicht werden.

Die erfindungsgemäße Vorrichtung soll hierbei nicht auf die oben beschriebene Anwendung und Ausführungsform beschränkt sein. Insbesondere kann die erfindungsgemäße Vorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Vorrichtung mit einer rotier- und translatorisch auslenkbaren Plattform in einer Ansicht schräg von oben,
- Fig. 2: eine Darstellung der Vorrichtung mit Details einer Gegenkrafteinheit, einem ersten Verbindungselement und mit einem mit dem ersten Verbindungselement teilweise einstückig ausgeführten zweiten Verbindungselement, die die Plattform und die Gegenkrafteinheit verbinden und die eine Gegenkraft, die von der Gegenkrafteinheit erzeugt wird, zur Erzeugung eines Gegenmoments zu einer Rotationsbewegung der Plattform, auf die Plattform einleitet,
- Fig. 3: eine schematisierte Darstellung einer Anordnung des ersten Verbindungselements und des zweiten Verbindungselements und einer Verbindung des ersten Verbindungselements und des zweiten Verbindungselements zu der Gegenkrafteinheit und
- Fig. 4: eine schematisierte Darstellung einer alternativen Vorrichtung mit einer alternativen Anordnung des ersten Verbindungselements und des zweiten Verbindungselements und einer alternativen Verbindung des ersten Verbindungselements und des zweiten Verbindungselements zu der Gegenkrafteinheit.

### Beschreibung der Ausführungsbeispiele

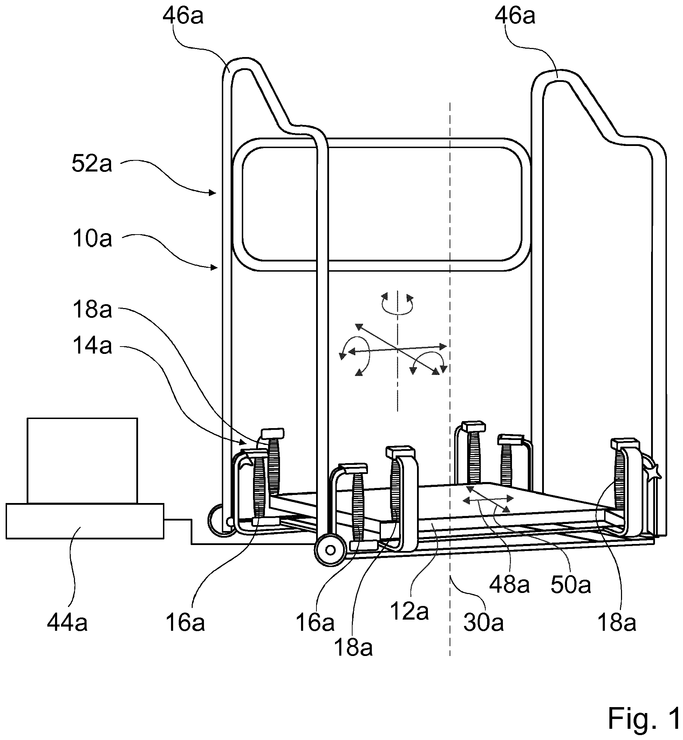

Fig. 1 zeigt eine erfindungsgemäße Vorrichtung 10a zum Gleichgewichtstraining und/oder feinmotorischen Training mit einer beweglichen Plattform 12a, die rotatorisch und translatorisch in zwei Dimensionen bewegbar ist, und mit einer Gegenkrafteinheit 20a, die einem Drehmoment, das zu einer Rotation der Plattform 12a einen Widerstand entgegensetzt, in einer Ansicht schräg von oben. Die bewegliche Plattform 12a ist mittels Aufhängungselementen 16a, 18a einer Aufhängungseinheit 14a an einem Rahmen 52a, der beispielsweise aus Aluminium hergestellt sein kann, schwingend gelagert, wobei die Aufhängungselemente 16a eine Lagerung in einer Bewegungsrichtung 48a der beweglichen Plattform 12a und die Aufhängungselemente 18a eine Lagerung in einer zu der Bewegungsrichtung 48a der beweglichen Plattform 12a senkrechten Bewegungsrichtung 50a der beweglichen Plattform 12a bereitstellen. Die Aufhängungselemente 16a, 18a sind dabei als kunststoffummantelte Stahlseile ausgeführt, welche über eine Deformation eines Materials eines Kunststoffmantels eine zusätzliche Dämpfung der Bewegung bewirken. Der Rahmen 52a weist zwei Griffe 46a auf, die insbesondere als Aufsteighilfe vorgesehen sind. Die Plattform 12a ist in zwei Bewegungsrichtungen 48a, 50a und somit zweidimensional auslenkbar. In alternativen Ausgestaltungen kann die Plattform 12a zusätzlich noch kippbar ausgebildet sein. Die Vorrichtung 10a ist zu einer Verwendung bei einem Gleichgewichtstraining bei einer Therapie vorgesehen und ferner dazu vorgesehen, in Zusammenwirkung mit einer Spielkonsole 44a eingesetzt zu werden. Durch Zusammenwirkung mit der Spielkonsole 44a kann insbesondere eine Simulation unterschiedlicher Bedingungen, beispielsweise für ein Training, ermöglicht werden. Eine Verwendung der Vorrichtung 10a kann auch unter Bedingungen reduzierter Schwerkraft, beispielsweise an Bord einer Raumstation oder einer Raumkapsel oder auf einem Mond, Planeten oder Asteroiden, für Trainingsmaßnahmen von Astronauten zum Muskelaufbau stattfinden. Die bewegliche Plattform 12a der Vorrichtung 10a wird durch Bewegungen einer auf einer ebenen Oberfläche der Plattform 12a stehenden Person ausgelenkt, wobei in alternativen Ausgestaltungen eine Oberfläche der Plattform 12a auch eine von einer ebenen Gestaltung abweichende Form aufweisen kann. Ferner kann in alternativen Ausgestaltungen die bewegliche Plattform 12a durch Auslenkung mittels einer Auslenkeinheit, beispielsweise eines angebrachten Exzentermotors, in Bewegung versetzt werden, wobei die auf der Oberfläche stehende Person zur Erreichung eines Trainingseffekts die durch die Auslenkeinheit verursachte Bewegung ausgleichen muss.

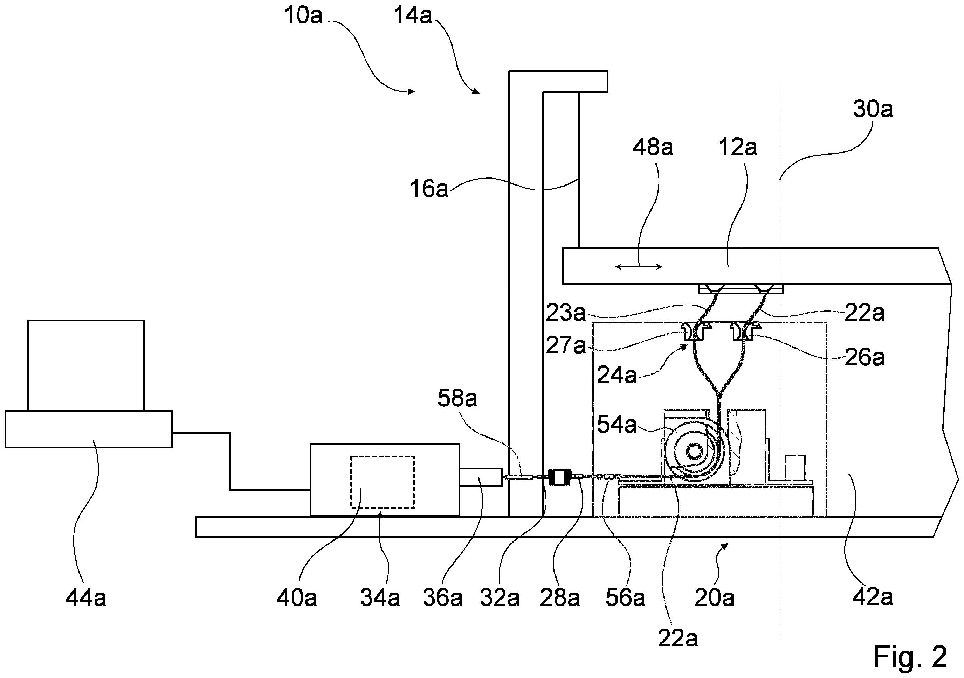

Die Vorrichtung 10a weist eine Gegenkrafteinheit 20a auf (Fig. 2). Außerdem weist die Vorrichtung 10a ein erstes Verbindungselement 22a und ein zweites Verbindungselement 23a auf, die die Gegenkrafteinheit 20a mit der Plattform 12a verbinden, wobei das erste Verbindungselement 22a und das zweite Verbindungselement 23a in einem unterschiedlichen Abstand zu einem Zentrum der Plattform 12a an dieser angeordnet sind. Das erste Verbindungselement 22a und das zweites Verbindungselement 23a übertragen eine durch die Gegenkrafteinheit 20a erzeugte Gegenkraft auf die Plattform 12a, wobei aufgrund des unterschiedlichen Abstands des zumindest eine ersten Verbindungselements 22a und des zumindest eine zweite Verbindungselements 23a zu dem Zentrum der Plattform 12a die Gegenkraft in ein Gegenmoment, das einer Rotation der Plattform 12a entgegenwirkt, umgesetzt wird. Das erste Verbindungselement 22a ist als ein zentrales, zumindest teilweise entlang einer Nullachse 30a einer Ruhelage der Plattform 12a verlaufendes Verbindungselement 22a ausgebildet. Das erste Verbindungselement 22a und das zweite Verbindungselement 23a sind teilweise einstückig miteinander ausgebildet und bilden an einem Kontaktpunkt eine Y-Form aus. Von der Plattform 12a aus betrachtet ist das zweite Verbindungselement 23a nach einem Übergang in der Y-Form in das erste Verbindungselement 22a mit der Gegenkrafteinheit 20a verbunden. Das zentrale Verbindungselement 22a ist von einem als Stahlseil ausgebildeten Seilelement gebildet. In alternativen Ausführungsvarianten kann das zentrale Verbindungselement 22a auch von einem Seilelement aus einem anderen Material als Stahl gebildet sein und beispielsweise eine Beschichtung aufweisen oder das zentrale Verbindungselement 22a kann zumindest teilweise von einer Kette gebildet sein. Das zentrale Verbindungselement 22a ist an einem Mittelpunkt einer unteren Fläche der beweglichen Plattform 12a mit dieser verbunden.

Ein rotatorischer Anteil und ein translatorischer Anteil von Bewegungen der Plattform 12a werden durch das erste Verbindungselement 22a und das zweite Verbindungselement 23a übertragen, wobei der translatorische Anteil und der rotatorische Anteil auf unterschiedliche Weisen in eine eindimensionale Translation des ersten Verbindungselements 22a und des zweiten Verbindungselements 23a umgesetzt werden. Im Folgenden wird zuerst eine Übertragung des translatorischen Anteils der Bewegung der Plattform 12a beschrieben. Das erste Verbindungselement 22a, das als zentrales Verbindungselement 22a ausgebildet ist, und das zweite Verbindungselement 23a übertragen den translatorischen Anteil einer zumindest zweidimensionalen Bewegung der Plattform 12a eindimensional auf die Gegenkrafteinheit 20a. Eine Bewegungswandlungseinheit 24a wandelt dabei einen rotatorischen Anteil der zumindest zweidimensionalen Bewegung der Plattform 12a in eine Drehbewegung des zentralen Verbindungselements 22a um eine eigene Achse um. Die Bewegungswandlungseinheit 24a weist eine Bohrung 26a in einem Körper mit einer abgerundeten Öffnung auf. In einer alternativen Ausgestaltung kann die Bewegungswandlungseinheit 24a anstatt einer Bohrung 26a in einem Körper eine Hülse mit einer abgerundeten Öffnung aufweisen. Grundsätzlich ist es ebenfalls vorstellbar, dass die Bohrung 26a oder die Hülse eine scharfkantige Öffnung aufweist. Das zentrale Verbindungselement 22a ist durch die Bohrung 26a durchgeführt, wobei es an der Öffnung anliegt. Bei einer Auslenkung der Plattform 12a aus der Ruhelage wird der translatorische Anteil der Auslenkung und somit der Bewegung der Plattform 12a in eine translatorische Bewegung des zentralen Verbindungselements 22a umgesetzt, während eine rotatorischer Anteil der Bewegung in eine Rotation eines Teilbereichs des zentralen Verbindungselements 22a zwischen Bohrung 26a und Plattform 12a um die Bohrung 26a der Bewegungswandlungseinheit 24a und bei mehrfacher Rotation um die Bohrung 26a in eine Drehung des zentralen Verbindungselements 22a um die eigene Achse umgesetzt wird. Somit wird der rotatorische Anteil der Bewegung der Plattform 12a herausgefiltert und es verbleibt nur ein Betrag der Auslenkung aus der Ruhelage, der durch Gegenkrafteinheit 20a ein Widerstand entgegengesetzt wird. Das zweite Verbindungselement 23a ist durch eine analog ausgebildete Bohrung 27a mit einer abgerundeten Öffnung in dem Körper durchgeführt. Grundsätzlich ist es vorstellbar, unterschiedliche Widerstandsstärken für jeweils eine der zwei Bewegungsrichtungen 48a, 50a der Plattform 12a vorzusehen und anstelle des zentralen Verbindungselements 22a unterschiedliche Elemente zur Verbindung mit separaten Gegenkraftelementen vorzusehen. Der rotatorische Anteil der Bewegung der Plattform 12a wird über die unterschiedlichen Abstände des ersten Verbindungselements 22a und des zweiten Verbindungselements 23a von dem Zentrum der Plattform 12a an die Gegenkrafteinheit 20a übertragen, da eine Rotation der Plattform 12a in unterschiedlich lange Zugwege des ersten Verbindungselements 22a und des zweiten Verbindungselements 23a aufgrund eines unterschiedlichen Wegumfangs bei Rotation durch die unterschiedlichen Abstände von dem Zentrum der Plattform 12a umgesetzt werden. Entsprechend werden das erste Verbindungselemente 22a und das zweite Verbindungselement 23a, die teilweise einstückig miteinander ausgebildet sind, als Gesamtheit um eine Differenz der Zugwege translatorisch ausgelenkt. Durch einen Unterschied des Zugwegs des ersten Verbindungselements 22a zu dem Zugweg des zweiten Verbindungselements 23a wird durch den rotatorischen Anteil der Bewegung der Plattform 12a, unabhängig von und zusätzlich zu einer Translationsbewegung der Plattform 12a, eine translatorische Bewegung des ersten Verbindungselements 22a und des zweiten Verbindungselements 23a bewirkt, die auf die Gegenkrafteinheit 20a übertragen wird und der die Gegenkrafteinheit 20a einen Widerstand entgegensetzt.

Die Gegenkrafteinheit 20a weist ein Federelement 32a auf, das mit dem zentralen Verbindungselement 22a verbunden ist und das einer translatorischen Bewegung des zentralen Verbindungselements 22a einen Widerstand aufgrund einer Rückstellkraft entgegensetzt, so dass eine Auslenkung und eine Rotation der Plattform 12a über das zentrale Verbindungselement 22a ein Widerstand entgegengesetzt wird. Ein zusätzliches Dämpfungselement 58a der Gegenkrafteinheit 20a ist mit dem Federelement 32a in Reihe angeordnet. Die Gegenkrafteinheit 20a weist ein Element mit einer nichtlinearen Kraftcharakteristik auf, das von dem zusätzlichen Dämpfungselement 58a gebildet ist. Das zusätzliche Dämpfungselement 58a ist als umsponnenes Gummiseil mit einer nichtlinearen Kraftcharakteristik ausgebildet. In alternativen Ausgestaltungen der Gegenkrafteinheit 20a kann das zusätzliche Dämpfungselement 58a der Gegenkrafteinheit 20a parallel zu dem Federelement 32a angeordnet sein. Das zentrale Verbindungselement 22a ist ferner zu einer Dämpfung der Bewegung der Plattform 12a mittels äußerer Reibung vorgesehen, da das zentrale Verbindungselement 22a bei einer translatorischen Bewegung mit der Oberfläche der Bohrung 26a gemäß der Euler-Eytelweinschen Gleichung reibt und bei dieser äußeren Reibung kinetische Energie des zentralen Verbindungselements 22a und somit der Plattform 12a dissipiert wird, wodurch die Bewegung der Plattform 12a gedämpft wird. Insbesondere ist die äußere Reibung des zentralen Verbindungselements 22a mit der Oberfläche der Bohrung 26a zu einer Dämpfung eines Nachschwingens der Plattform 12a bei Auslenkung sowie von Bewegungen durch ein Aufsteigen einer Person vorgesehen. Im dargestellten Ausführungsbeispiel sind sowohl das zentrale Verbindungselement 22a als auch die Oberfläche der abgerundeten Öffnung der Bohrung 26a aus Stahl hergestellt, grundsätzlich können jedoch sowohl das zentrale Verbindungselement 22a als auch die Oberfläche der abgerundeten Öffnung der Bohrung 26a aus anderen Materialien hergestellt sein. Auf einer Strecke zwischen der Bohrung 26a und dem Federelement 32a wird das zentrale Verbindungselement 22a mittels einer Umlenkrolle 54a umgelenkt. Die Vorrichtung 10a weist eine von einem Wirbellager gebildete Entdralleinheit 56a zu einer Verbindung des zentralen Verbindungselements 22a und des Federelements 32a auf, das eine Drehung des zentralen Verbindungselements 22a um die eigene Achse ermöglicht, so dass eine Krafteinwirkung auf das Federelement 32a durch die Drehung des Verbindungselements 22a um die eigene Achse vermieden wird und das Federelement 32a lediglich mit einer Krafteinwirkung durch den Betrag der Auslenkung der Plattform 12a aus der Ruhelage beaufschlagt wird. Die von dem Wirbellager gebildete Entdralleinheit 56a ist über ein Hülsenelement 28a mit dem Federelement 32a verbunden. Es ist in alternativen Ausgestaltungen vorstellbar, dass die Gegenkrafteinheit 20a zusätzlich zu oder anstelle von dem Federelement 32a beispielsweise eine Wirbelstrombremse oder eine Reibbremse zur Dämpfung aufweist.

Eine Einstelleinheit 34a ist zu einer Einstellung einer Gegenkraftstärke der Gegenkrafteinheit 20a vorgesehen. Die Einstelleinheit 34a weist einen elektrischen Aktuator 36a auf, der eine Vorspannkraft auf das Federelement 32a einstellt. Über eine Einstellung der Vorspannkraft des Federelements 32a durch den Aktuator 36a wird die Gegenkraftstärke der Gegenkrafteinheit 20a eingestellt, da zum einen durch eine erhöhte Vorspannkraft einer Auslenkung des zentralen Verbindungselements 22a durch die Plattform 12a eine höhere Gegenkraft entgegengesetzt wird und zum anderen aufgrund einer geänderten Kraft auf das zentrale Verbindungselement 22a eine Veränderung einer Reibkraft mit der Oberfläche der Bohrung 26a gemäß der Euler-Eytelweinschen Gleichung erreicht wird. Die Einstelleinheit 34a weist eine Steuereinheit 40a auf, die in die Einstelleinheit 34a integriert ist und die eine Recheneinheit und eine Speichereinheit mit darin gespeicherten Programmen umfasst. Die Steuereinheit 40a ist zu einer Ansteuerung der Aktuators 36a zu einer Anpassung der Dämpfung vorgesehen. Es können insbesondere verschiedene Gegenkraftstärken zu einer Anpassung der Vorrichtung 10a an unterschiedliche Bedürfnisse von Nutzern der Vorrichtung 10a, beispielsweise an unterschiedliche Grade einer Gleichgewichtsbeeinträchtigung von unterschiedlichen Personen, die ein Gleichgewichtstraining bei einer Therapie durchführen, eingestellt werden. Aufgrund des elektrischen Aktuators 36a kann eine Einstellung der Gegenkraftstärke stufenlos erfolgen. Die Steuereinheit 40a hat in ihrer Speichereinheit insbesondere verschiedene Trainingsprogramme mit unterschiedlichen Schwierigkeitsgraden, die über unterschiedliche Gegenkraftstärken realisiert werden, gespeichert, wobei in manchen Trainingsprogrammen der Schwierigkeitsgrad sich im Verlauf einer Ausführung des Trainingsprogramms ändert. Insbesondere kann mittels der Einstelleinheit 34a über die Steuereinheit 40a und den elektrischen Aktuator 36a eine Einstellung und Anpassung der Gegenkraftstärken während einer Benutzung der Vorrichtung 10a durchgeführt werden, wodurch eine Realisierung von Trainingsprogrammen mit unterschiedlichen Gegenkraftstärken und somit Schwierigkeitsgraden ohne eine Unterbrechung des Trainingsprogramms zu einer Anpassung der Gegenkraftstärke ermöglicht wird. Die Steuereinheit 40a ist zur Ausführung eines Trainingsprogramms vorgesehen, bei dem einer langsamen Absenkung der Gegenkraftstärke der Gegenkrafteinheit 20a durch eine Zunahme einer Auslenkungsamplitude der Plattform 12a eine rasche Erhöhung der Gegenkraftstärke überlagert wird. Die rasche Erhöhung der Gegenkraftstärke dient dazu, eine übergroße Zunahme der Auslenkungsamplitude der Plattform 12a zu vermeiden, während durch die langsame Absenkung der Gegenkraftstärke im Verlauf des Trainingsprogramm durch eine allmähliche Zunahme einer Auslenkungsamplitude bei einer gleichen Bewegung einer Person auf der Plattform 12a die Person im Verlauf des Trainingsprogramms immer wieder erneut gefordert und somit einen hohen Trainingseffekt erzielt wird. Insbesondere umfasst das Trainingsprogramm eine Anfangsphase mit einer hohen Gegenkraftstärke, in der Bewegungen der Person auf der Plattform 12a nur zu einer geringen Auslenkung der Plattform 12a führen. Nach der Anfangsphase erfolgt durch die langsame Absenkung der Gegenkraftstärke der Gegenkrafteinheit 20a ein Übergang in eine eigentliche Trainingsphase, in der aufgrund der Absenkung der Gegenkraftstärke der Gegenkrafteinheit 20a resultierenden Erhöhung der Auslenkungsamplitude der Plattform 12a durch die Steuereinheit 40a zu einer raschen Erhöhung der Gegenkraftstärke angesteuert wird und der langsamen Absenkung der Gegenkraftstärke überlagert wird, wodurch sich schnell wechselnde Trainingsbedingungen ergeben, durch die ein hoher Trainingseffekt erzielt wird.

Ferner ist es in Zusammenwirken mit der Spielkonsole 44a mittels der Steuereinheit 40a möglich, unterschiedliche Situationen für Trainingsspiele an der Spielkonsole 44a durch unterschiedliche Gegenkraftstärken zu simulieren, beispielsweise für ein Training von Astronauten. In alternativen Ausgestaltungen kann die Steuereinheit 40a in die Spielkonsole 44a integriert sein, so dass eine Ansteuerung der Einstelleinheit 34a durch die Spielkonsole 44a erfolgen kann. Ferner sind alternative Ausgestaltungen vorstellbar, bei denen eine Anpassung der Gegenkraftstärke per Hand an dem Federelement 32a vorgenommen wird. Die Steuereinheit 40a ist dazu vorgesehen, in Abhängigkeit von Messwerten zumindest eines Sensors 42a zur Messung einer Auslenkung der Plattform 12a die Gegenkraftstärke einzustellen. Der Sensor 42a ist von einer Kamera gebildet, über die die Steuereinheit 40a die Bewegung der Plattform 12a anhand einer Detektion von Markierungen an einer Unterseite der Plattform 12a erreicht. In alternativen Ausgestaltungen kann der Sensor 42a zur Positionsmessung der Plattform 12a von anderen, einem Fachmann als geeignet erscheinenden Sensoren 42a gebildet sein.

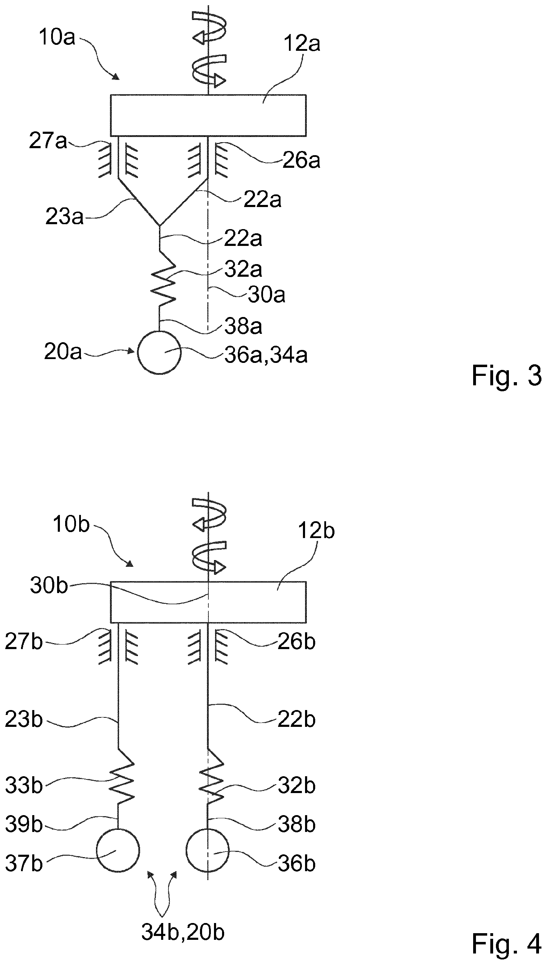

In Figur 3 ist eine schematisierte Darstellung einer Anordnung des ersten Verbindungselements 22a und des zweiten Verbindungselements 23a und einer Verbindung der Plattform 12a mit der Gegenkrafteinheit 20a über das erste Verbindungselement 22a und das zweiten Verbindungselement 23a gezeigt. Die Plattform 12a ist in der Ruhelage dargestellt. Das weitere Verbindungselement 38a kann als Element einer Kraftunterbrechungseinheit ausgebildet sein, indem es in einem entspannten Zustand durch eine Translation der Verbindungselemente 22a, 23a zuerst gestrafft wird, wobei das Federelement 32a während einer Straffung des weiteren Verbindungselements 38a weitgehend kräftemäßig beaufschlagungsfrei ist und somit keine Gegenkraft erzeugt, so dass die Verbindungselemente 22a, 23a bis zu einer vollständigen Straffung gegenkraftfrei translatieren können. Es kann somit ein Betriebsmodus bereitgestellt werden, in dem in einem Teilbereich einer translatorischen Auslenkung oder einer Rotation die Auslenkung oder Rotation teilweise frei von einer Gegenkraft oder einem Gegenmoment erfolgt. Das weitere Verbindungselement 38a kann mittels des Aktuators 36a zu einer Voreinstellung, einer Änderung oder Anpassung während eines Betriebs eines Teilbereichs der translatorischen Auslenkung oder der Rotation, indem diese frei von der Gegenkraft oder dem Gegenmoment erfolgen, gestrafft oder entspannt werden.

In der Figur 4 ist ein weiteres Ausführungsbeispiel der Erfindung gezeigt. Die nachfolgenden Beschreibungen und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3 verwiesen werden kann. Zur Unterscheidung der Ausführungsbeispiele ist der Buchstabe a den Bezugszeichen des Ausführungsbeispiels in den Figuren 1 bis 2 nachgestellt. In den Ausführungsbeispielen der Figur 3 ist der Buchstabe a durch den Buchstaben b ersetzt.

In Figur 4 ist in einer schematischen Darstellung, analog zu Figur 3, eine Vorrichtung 10b zum Gleichgewichtstraining und/oder feinmotorischen Training mit einer beweglichen Plattform 12b, die rotatorisch und translatorisch in zwei Dimensionen bewegbar ist, und mit einer Gegenkrafteinheit 20b, die einer Kraft zu einer Rotation der zumindest einen Plattform 12b einen Widerstand entgegensetzt, und mit einem ersten Verbindungselement 22b und mit einem zweiten Verbindungselement 23b, die die Gegenkrafteinheit 20b mit der Plattform 12b verbinden, wobei das erste Verbindungselement 22b und das zweite Verbindungselement 23b in einem unterschiedlichen Abstand zu einem Zentrum der Plattform 12b an dieser angeordnet sind und eine durch die Gegenkrafteinheit 20b erzeugte Gegenkraft zu einer Erzeugung eines Gegenmoments, das einer Rotation der zumindest einen Plattform 12b entgegenwirkt, auf die zumindest eine Plattform 12b übertragen. Das erste Verbindungselement 22b ist als ein zentrales, zumindest teilweise entlang einer Nullachse 30b einer Ruhelage der Plattform 12b verlaufendes Verbindungselement 22b ausgebildet. Die Plattform 12b ist in der Ruhelage dargestellt. In diesem Ausführungsbeispiel sind das erste Verbindungselement 22b und das zweite Verbindungselement 23b getrennt voneinander mit der Gegenkrafteinheit 20b verbunden. Das erste Verbindungselement 22a ist nach Durchgang durch eine Bohrung 26a mit einem Federelement 33a und über ein weiteres Verbindungselement 38b mit einem elektrischen Aktuator 36b einer Einstelleinheit 34b der Gegenkrafteinheit 20b verbunden. Das zweite Verbindungselement 23a ist nach Durchgang durch eine Bohrung 27a mit einem Federelement 33a und über ein weiteres Verbindungselement 39b mit einem elektrischen Aktuator 37a der Einstelleinheit 34b der Gegenkrafteinheit 20b verbunden. Die elektrischen Aktuatoren 36b, 37b stellen eine Vorspannung der Federelemente 32b, 33b und/oder beaufschlagen und/oder entspannen die Federelemente 32b, 33b während eines Betriebs der Vorrichtung 10b zusätzlich. Bei einer Rotation der Plattform 12b um eine Mittelachse werden die Verbindungselemente 32b, 33b aufgrund des unterschiedlichen Abstands zu dem Zentrum der Plattform 12b entlang unterschiedlich langer Umfangswege bewegt und somit um unterschiedliche Strecken aus einer vorherigen Lage ausgelenkt. Die weiteren Verbindungselemente 38b, 39b können als Kraftunterbrechungseinheit ausgebildet sein, indem sie in einem entspannten Zustand durch eine Translation der Verbindungselemente 22b, 23b zuerst gestrafft werden, wobei die Federelemente 32b, 33b während einer Straffung der weiteren Verbindungselemente 38b, 39b weitgehend beaufschlagungsfrei sind und somit keine Gegenkraft erzeugen, so dass die Verbindungselemente 22b, 23b bis zu einer vollständigen Straffung gegenkraftfrei translatieren können. Es kann somit ein Betriebsmodus bereitgestellt werden, in dem in einem Teilbereich eine translatorische Auslenkung oder eine Rotation die Auslenkung oder Rotation teilweise frei von einer Gegenkraft oder einem Gegenmoment erfolgt. Die weiteren Verbindungselemente 38b, 39b können mittels der Aktuatoren 36b, 37b zu einer Voreinstellung, einer Änderung oder Anpassung während eines Betriebs eines Teilbereichs der translatorischen Auslenkung oder der Rotation, indem diese frei von der Gegenkraft oder dem Gegenmoment erfolgt, gestrafft oder entspannt werden.

### Bezugszeichen

- 10: Vorrichtung
- 12: Plattform
- 14: Aufhängungseinheit
- 16: Aufhängungselement
- 18: Aufhängungselement
- 20: Gegenkrafteinheit
- 22: Verbindungselement
- 23: Verbindungselement
- 24: Bewegungswandlungseinheit
- 26: Bohrung
- 27: Bohrung
- 28: Hülsenelement
- 30: Nullachse
- 32: Federelement
- 33: Federelement
- 34: Einstelleinheit
- 36: Aktuator
- 37: Aktuator
- 38: Verbindungselement
- 39: Verbindungselement
- 40: Steuereinheit
- 42: Sensor
- 44: Spielkonsole
- 46: Griff
- 48: Bewegungsrichtung
- 50: Bewegungsrichtung
- 52: Rahmen
- 54: Umlenkrolle
- 56: Entdralleinheit
- 58: Zusätzliches Dämpfungselement

## Patentansprüche

1. Vorrichtung, insbesondere zum Gleichgewichtstraining und/oder feinmotorischen Training, mit zumindest einer beweglichen Plattform (12ab), die zumindest rotatorisch bewegbar ist und eine Standoberfläche aufweist, auf die sich eine Person aufstellt, die die Plattform aufgrund eigener Bewegungen auslenkt, mit zumindest einer Gegenkrafteinheit (20a-b), die dazu vorgesehen ist, einem Drehmoment, das zu einer Rotation der zumindest einen Plattform (12a-b) führt, einen Widerstand entgegenzusetzen, mit zumindest einem ersten Verbindungselement (22ab) und zumindest einem zweiten Verbindungselement (23a-b), die die Gegenkrafteinheit (20a-b) mit der zumindest einen Plattform (12a-b) verbinden, wobei das zumindest eine erste Verbindungselement (22a-b) und das zumindest eine zweite Verbindungselement (23a-b) in einem unterschiedlichen Abstand zu einem Zentrum der zumindest einen Plattform (12a-b) an dieser angeordnet sind, wobei das zumindest eine erste Verbindungselement (22a-b) als ein zentrales, in zumindest einer Ruhelage zumindest teilweise entlang einer Nullachse (30a-b) der Ruhelage der zumindest einen Plattform (12a-b) verlaufendes Verbindungselement (22a-b) ausgebildet ist **dadurch gekennzeichnet, dass,** die zumindest eine Gegenkrafteinheit (20a-b) zumindest eine Bewegungswandlungseinheit (24a-b) aufweist, die einen rotatorischen Anteil der zumindest zweidimensionalen Bewegung der zumindest einen Plattform (12a-b) in eine Drehbewegung des zumindest einen zentralen Verbindungselements (22a-b) um eine eigene Achse umwandelt, wobei die Bewegungswandlungseinheit (24a-b) wenigstens eine Bohrung (26a-b) mit einer abgerundeten Öffnung aufweist und das zentrale Verbindungselement durch die Bohrung durchgeführt ist, wobei die Vorrichtung zumindest eine Einstelleinheit (34a) umfasst, die zu einer Einstellung einer Gegenkraftstärke der Gegenkrafteinheit (20a) vorgesehen ist, wobei die Einstelleinheit (34a) einen elektrischen Aktuator (36a) aufweist, der eine Vorspannkraft auf ein Federelement (32a) einstellt, wobei über eine Einstellung der Vorspannkraft des Federelements (32a) durch den Aktuator (36a) die Gegenkraftstärke der Gegenkrafteinheit (20a) eingestellt wird, da zum einen durch eine erhöhte Vorspannkraft einer Auslenkung des zentralen Verbindungselements (22a) durch die Plattform (12a) eine höhere Gegenkraft entgegengesetzt wird und zum anderen aufgrund einer geänderten Kraft auf das zentrale Verbindungselement (22a) eine Veränderung einer Reibkraft mit der Oberfläche der Bohrung (26a) gemäß der Euler-Eytelweinschen Gleichung erreicht wird.

2. Vorrichtung nach Anspruch 1, **dadurch gekennzeichnet, dass** das zumindest eine erste Verbindungselement (22b) und das zumindest eine zweite Verbindungselement (23b) getrennt voneinander mit der Gegenkrafteinheit (20b) verbunden sind.

3. Vorrichtung nach Anspruch 2, **dadurch gekennzeichnet, dass** das zumindest eine erste Verbindungselement (22a) und das zumindest eine zweite Verbindungselement (23a) zumindest teilweise einstückig miteinander ausgebildet sind.

4. Vorrichtung nach einem der vorherigen Ansprüche, **dadurch gekennzeichnet, dass** die zumindest einen Gegenkrafteinheit (20a-b) zumindest das Federelement (32a-b) aufweist.

5. Vorrichtung nach einem der vorherigen Ansprüche, **dadurch gekennzeichnet, dass** die zumindest eine Einstelleinheit (34a-b) eine Steuereinheit (40a-b) aufweist.

6. Vorrichtung nach einem der vorherigen Ansprüche, **dadurch gekennzeichnet, dass** das zumindest eine erste Verbindungselement (22a-b) und das zumindest eine zweite Verbindungselement (23a-b) zu einer Dämpfung der Bewegung der zumindest einen Plattform (12a-b) mittels äußerer Reibung vorgesehen sind.

7. Vorrichtung nach einem der vorhergehenden Ansprüche, **dadurch gekennzeichnet, dass** die zumindest eine Gegenkrafteinheit zumindest ein Element mit einer nichtlinearen Kraftcharakteristik aufweist.

8. Verwendung einer Vorrichtung (10a-b) nach einem der vorhergehenden Ansprüche zum Gleichgewichtstraining und/oder feinmotorischen Training, vorzugsweise in Zusammenwirkung mit einer Spielkonsole (44a-b).

9. Verwendung nach Anspruch 8 unter Bedingungen reduzierter Schwerkraft.

## Claims

1. Device, in particular for balance training and/or fine motor skills training, with at least one movable platform (12a-b), which is at least rotationally movable and comprises a stand surface on which a person stands, deflecting the platform via his own movements, with at least one counterforce unit (20a-b), which is configured to put up a resistance to a torque moment that results in a rotation of the at least one platform (12a-b), with at least one first connecting element (22a-b) and with at least one second connecting element (23a-b) which connect the counterforce unit (20a-b) to the at least one platform (12a-b), wherein the at least one first connecting element (22a-b) and the at least one second connecting element (23a-b) are arranged on the at least one platform (12a-b) at different distances to a centre of said at least one platform (12a-b), wherein the at least one first connecting element (22a-b) is embodied as a central connecting element (22a-b) extending, in at least one rest position, at least partially along a zero axis (30a-b) of the rest position of the at least one platform (12a-b), **characterised in that** the at least one counterforce unit (20a-b) comprises at least one movement converting unit (24a-b), which converts a rotational component of the at least two-dimensional movement of the at least one platform (12a-b) into a rotational movement of the at least one central connecting element (22a-b) about an axis of its own, wherein the movement converting unit (24a-lb) comprises at least one bore (26a-b) with a rounded opening and the central connecting element is guided through the bore, wherein the device comprises at least one setting unit (34a), which is configured for setting a counterforce strength of the counterforce unit (20a), wherein the setting unit (34a) comprises an electrical actuator (36a) adjusting a pre-tensioning force to a spring element (32a), wherein the counterforce strength of the counterforce unit (20a) is set via an adjustment of the pre-tensioning force of the spring element (32a) by the actuator (36a) as, on the one hand, by an increased pre-tensioning force a deflection of the central connecting element (22a) by the platform (12a) is countered by an increased counterforce and, on the other hand, due to the Euler-Eytelwein equation, a changed force onto the central connecting element (22a) results in a change of a friction force with the surface of the bore (26a).

2. Device according to claim 1, **characterised in that** the at least one first connecting element (22b) and the at least one second connecting element (23b) are connected to the counterforce unit (20b) separately from one another.

3. Device according to claim 2, **characterised in that** the at least one first connecting element (22a) and the at least one second connecting element (23a) are embodied at least partly in a one-part implementation with each other.

4. Device according to one of the preceding claims, **characterised in that** the at least one counterforce unit (20a-b) comprises at least the spring element (32a-b).

5. Device according to one of the preceding claims, **characterised in that** the at least one setting unit (34a-b) comprises a control unit (40a-b).

6. Device according to one of the preceding claims, **characterised in that** the at least one first connecting element (22a-b) and the at least one second connecting element (23a-b) are configured for damping the movement of the at least one platform (12a-b) via external friction.

7. Device according to one of the preceding claims, **characterised in that** the at least one counterforce unit comprises at least one element having a non-linear force characteristic.

8. Usage of a device according to one of the preceding claims for balance training and/or fine motor skills training, preferably in cooperation with a games console (44a-b).

9. Usage according to claim 8 under reduced gravity conditions.

## Revendications

1. Dispositif, notamment pour l'entraînement de l'équilibre et/ou de la motricité fine, avec au moins une plate-forme mobile (12a-b), laquelle est mouvable de façon rotative et comprend une planche porteuse, sur laquelle une personne se monte et fait dévier la plate-forme par ses propres mouvements , avec au moins une unité de contre-force (20a-b) prévue pour résister à un torque engendrant une rotation de l'au moins une plate-forme (12a-12b), avec au moins un premier élément connectif (22a-b) et au moins un deuxième élément connectif (23a-b), qui relient l'unité de contre-force (20a-b) avec l'au moins une plate-forme (12a-b), l'au moins un premier élément connectif (22a-b) et l'au moins un deuxième élément connectif (23a-b) étant agencés dans un écart différent d'un centre de l'au moins une plate-forme (12a-b) et sur celle-ci, l'au moins un premier élément connectif (22a-b) étant implémenté comme élément connectif (22a-b) central et s'étendant dans au moins une position de repos de l'au moins partiellement le long d'un axe zéro (30a-b) d'une position de repos de l'au moins une plate-forme (12a-12b), **caractérisé en ce que** l'au moins une unité de contre-force (20a-b) comporte au moins une unité à conversion de mouvement (24a-b), laquelle convertit une composante rotative du mouvement au moins bidimensionnel de l'au moins une plate-forme (12a-b) en un mouvement rotatif de l'au moins un élément connectif (22a-b) central autour de son propre axe, l'unité à conversion de mouvement (24a-b) comportant au moins un perçage (26a-b) avec une aperture arrondie et l'élément connectif central (22a-b) traversant le perçage, le dispositif comportant au moins une unité à ajustement (34a), laquelle est prévue pour ajuster une intensité de contre-force de l'unité de contre-force (20a), l'unité à ajustement (34a) comprenant un actionneur électrique (36a), qui ajuste une force de précontrainte sur un élément de ressort (32a), l'intensité de contre-force de l'unité de contre-force (20a) étant ajustée par le biais d'un ajustement de la force de précontrainte de l'élément de ressort (32a) par l'actionneur, parce que d'une part par une augmentation de la force de précontrainte une contre-force plus élevée sera opposée à la déflexion de l'élément connectif central (22a) par la plate-forme et, d'autre part, en raison d'une modification de la force sur l'élément connectif central (22a) une modification de la force de friction avec la surface du perçage (26a) sera achevée selon l'équation d'Euler-Eytelwein.

2. Dispositif selon la revendication 1, **caractérisé en ce que** l'au moins un premier élément connectif (22b) et l'au moins un deuxième élément connectif (23b) sont connectés avec l'unité de contre-force (20b) de telle manière qu'ils sont séparés l'un de l'autre.

3. Dispositif selon la revendication 2, **caractérisé en ce que** l'au moins un premier élément connectif (22a) et l'au moins un deuxième élément connectif (23a) sont implémentés intégralement l'un avec l'autre, au moins partiellement.

4. Dispositif selon l'une quelconque des revendications précédentes, **caractérisé en ce que** l'au moins une unité de contre-force (20a-b) comprend au moins l'élément de ressort (32a-b).

5. Dispositif selon l'une quelconque des revendications précédentes, **caractérisé en ce que** l'au moins une unité d'ajustement (34a-b) comprend une unité de commande (40a-b).

6. Dispositif selon l'une quelconque des revendications précédentes, **caractérisé en ce que** l'au moins un premier élément connectif (22a-b) et l'au moins un deuxième élément connectif (23a-b) sont prévus pour amortir le mouvement de l'au moins une plate-forme (12a-b) par friction extérieure.

7. Dispositif selon l'une quelconque des revendications précédentes, **caractérisé en ce que** l'au moins une unité de contre-force comporte au moins un élément ayant une caractéristique de force non-linéaire.

8. Usage d'un dispositif (10a-b) selon l'une quelconque des revendications précédentes pour l'entraînement de l'équilibre et/ou de la motricité fine, préférablement en coopération avec une console de jeux (44a-b).

9. Usage selon la revendication 8 sous conditions de gravité réduite.
